Europäisches Patentamt

European Patent Office

Office européen des brevets

(19)

(11) Numéro de publication: **0 155 877**
**B1**

(12) **FASCICULE DE BREVET EUROPÉEN**

(45) Date de publication du fascicule du brevet:
**10.08.88**

(51) Int. Cl.⁴: **H 02 K 21/14,** H 02 K 21/12,
H 02 K 19/10, H 02 K 19/22

(21) Numéro de dépôt: **85400358.9**

(22) Date de dépôt: **26.02.85**

(54) **Machine électrodynamique vernier.**

(30) Priorité: **29.02.84 FR 8403154**

(43) Date de publication de la demande:
**25.09.85 Bulletin 85/39**

(45) Mention de la délivrance du brevet:
**10.08.88 Bulletin 88/32**

(84) Etats contractants désignés:
**BE CH DE FR GB IT LI NL SE**

(56) Documents cité:
**EP-A-0 094 978**
**DE-C-92 958**
**FR-A-848 115**
**FR-A-1 556 113**
**GB-A-418 659**
**GB-A-864 899**
**US-A-1 491 441**
**US-A-2 790 098**
**US-A-4 190 779**

(73) Titulaire: **ALSTHOM, 38, avenue Kléber, F-75784
Paris Cédex 16 (FR)**

(72) Inventeur: **Pouillange, Jean, 7 allée des Sylphides,
F-77410 Gressy En France (FR)**

(74) Mandataire: **Weinmiller, Jürgen, Lennéstrasse 9
Postfach 24, D-8133 Feldafing (DE)**

EP 0 155 877 B1

LIBER, STOCKHOLM 1988

## Description

La présente invention concerne une machine électrodynamique vernier.

On connaît une machine électrodynamique vernier, du type comportant

- deux pièces séparées l'une de l'autre par un entrefer, ces pièces pouvant se déplacer l'une par rapport à l'autre suivant une direction de manière que l'épaisseur moyenne de l'entrefer reste constante

- et des moyens coopérant magnétiquement avec une première de ces pièces pour créer un champ magnétique à 2p pôles, glissant le long de ladite direction, p étant un nombre entier,

la première pièce étant constituée par une armature magnétique comportant N dents formant N encoches, N étant un nombre entier multiple de p, les encoches débouchant dans l'entrefer et étant uniformément réparties le long de ladite direction,

la seconde pièce comportant M éléments disposés le long de ladite direction, M étant un nombre entier multiple de p et différent de N d'un nombre $T = t \times p$, t étant un nombre entier petit par rappport à P.

Par exemple, un moteur rotatif de ce type comporte un rotor monté en rotation autour d'un axe, et un stator coaxial comprenant N encoches et N dents. Dans les encoches est disposé un bobinage polyphasé créant un champ tournant dans le rotor. Les M éléments du rotor sont constitués par M dents formant M encoches, M étant supérieur à N. Un aimant est fixé coaxialement dans le rotor de manière à créer un champ magnétique continu qui traverse l'entrefer et pénètre dans le stator.

D'une manière générale les machines électrodynamiques vernier connues sont des machines de type synchrone homopolaire dont les deux pièces en mouvement relatif comportent respectivement deux rangées de dents en regard l'une de l'autre, le nombre des dents d'une rangée étant différent du nombre de dents de l'autre rangée. Unde telle machine est décrite par exemple dans le brevet allemand DE-C-92 958.

Ces machines présentent des inconvénients. En effet elles doivent avoir un entrefer de faible épaisseur, ce qui entraîne, par suite de la saturation du circuit magnétique, une diminution des ampères-tours et par conséquent du couple de la machine. Par ailleurs, le flux magnétique de ces machines présente une composante homopolaire qui ne produit pas de couple tout en contribuant à la saturation du circuit magnétique. Il en résulte un encombrement qui peut être prohibitif dans certaines applications.

La présente invention a pour but de pallier ces inconvénients.

Elle a pour objet une machine électrodynamique vernier du type mentionné précédemment, caractérisée en ce que

- les M éléments comportent chacun deux générateurs de flux orientés en sens alternés, ces éléments interférant avec les N dents de la première pièce pour créer dans cette première pièce un champ magnétique à 2 p pôles, capable de s'accrocher de manière synchrone au champ glissant à 2 p pôles créé par lesdits moyens coopérant magnétiquement avec la première pièce.

Plusieurs formes particulières de machines électrodynamiques vernier sont décrites ci-dessous, à titre d'exemple, en référence aux dessins annexés dans lesquels

- la figure 1 représente schématiquement, en coupe partielle longitudinale, un moteur vernier de type connu,

- la figure 2 est une vue montrant partiellement, en coupe transversale, le profil dentaire du stator et du rotor du moteur illustré par la figure 1,

- la figure 3 représente partiellement, en coupe transversale, un autre moteur vernier de type connu,

- la figure 4 est un graphique illustrant le fonctionnement du moteur représenté sur la figure 3,

- la figure 5 est une vue partielle, en coupe transversale, d'un réducteur vernier de type connu,

- la figure 6 est une vue partielle, en coupe transversale, d'un autre réducteur vernier de type connu

- et les figures 7 à 12 représentent partiellement, en coupe transversale, six moteurs différents, de type vernier, selon l'invention.

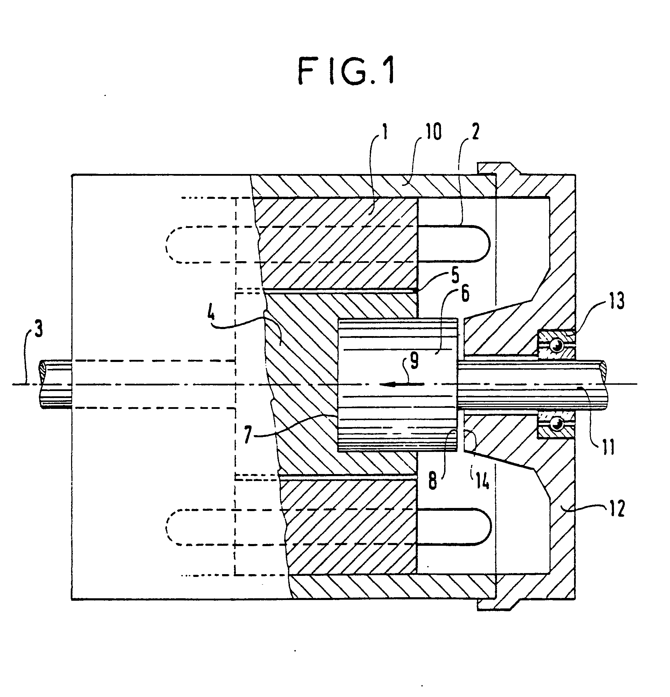

Le moteur vernier représenté sur la figure 1 comporte un stator 1 muni d'un bobinage 2. Le stator 1 est formé d'un assemblage de tôles magnétiques dentées et le bobinage 2, du type polyphasé à 2 p pôles, est logé dans les encoches situées entre les dents du stator. Le stator 1 est cylindrique de révolution autour d'un axe 3 et de section annulaire. Un rotor denté 4, formé aussi d'un assemblage de tôles magnétiques et monté en rotation autour de l'axe 3, est disposé dans le volume cylindrique intérieur du stator 1 et séparé de celui-ci par un entrefer cylindrique 5. Un aimant cylindrique 6 est fixé coaxialement dans le rotor 4. La fixation de l'aimant 6 dans le rotor 4 est réalisée de façon qu'une face plane 7 de l'aimant soit située dans le volume du rotor 4 alors que son autre face plane 8 est située en dehors de ce volume. L'aimant 6 est aimanté dans le sens 9 allant de la face 8 à la face 7, de manière à créer dans le rotor 4 un flux magnétique traversant l'entrefer 5 pour pénétrer dans le stator 1. Celui-ci est fixé à l'intérieur d'une carcasse magnétique cylindrique 10. Le rotor 4 et l'aimant 6 sont fixés sur un arbre 11 capable de tourner autour de l'axe 3 dans deux paliers montés dans des flasques s'appuyant sur la carcasse 10. Le flasque 12 représenté en coupe sur la figure 1 comporte un palier 13 monté sur l'arbre 11. Le flasque 12 est réalisé en acier magnétique et comporte une surface 14 disposée à proximité et en regard de la face 8 de l'aimant 6 de façon à refermer le circuit du flux magnétique créé par l'aimant 6.

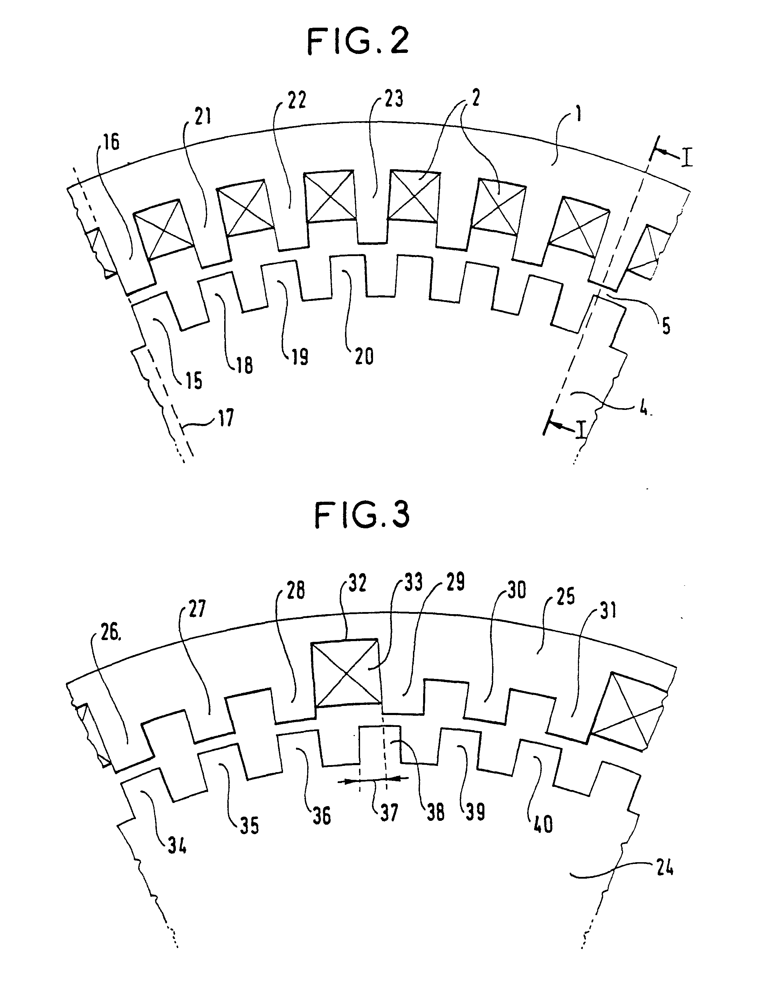

En référence à la figure 2, les dents du stator 1 sont uniformément réparties autour de l'axe de la machine. Le stator comporte n pas dentaires égaux entre eux, par paire de pôles définis par le bobinage 2. Comme il est visible sur la figure 2, les dents du rotor sont uniformément réparties autour de l'axe, mais le nombre de ces dents est plus élevé ; le rotor 4 comprend par exemple n + 1 dents par paire de pôles. La position du rotor par rapport au stator sur la figure est telle qu'un côté d'une dent 15 du rotor est aligné avec un côté d'une dent 16 du stator suivant une direction radiale 17. On voit alors que les dents suivantes 18, 19, 20 du rotor sont décalées par rapport aux dents homologues 21, 22, 23 du stator. Ces décalages provoquent une variation de la réluctance magnétique.

Lorsqu'on alimente le bobinage 2 par un courant électrique polyphasé, ce bobinage crée un champ à 2p pôles tournant autour de l'axe 3. Le moteur représenté sur les figures 1 et 2 est du type synchrone et la configuration des pôles d'excitation tourne à une vitesse égale à la vitesse de rotation du champ tournant, tandis que, par suite de l'effet vernier, la vitesse de rotation du rotor est égale au quotient de la vitesse du champ tournant par un coefficient K.

Rappelons que, dans le cas où le stator comporte n dents par paire de pôles et le rotor n + 1 dents par paire de pôles stator, le coefficient K est égal à n + 1. La réduction de vitesse ainsi obtenue s'accompagne, par rapport à une machine synchrone classique dont l'induit est traversé par le même champ continu, d'une augmentation du couple, celui-ci étant multiplié par le facteur K.

D'une manière générale, les décalages varient par paliers le long de l'entrefer. Dans le cas des figures 1 et 2, chaque palier correspond sensiblement à un pas dentaire. Comme le nombre de dents est en général élevé, les paliers sont de faible longueur et la loi de variation du décalage le long de l'entrefer est sensiblement linéaire.

Cependant il est possible de réaliser des machines vernier connues dans lesquelles les paliers de décalage successifs correspondent chacun à plusieurs pas dentaires. Par exemple, dans le moteur illustré par la figure 3, le rotor 24 comporte des pas dentaires régulièrement répartis, tandis que le stator 25 comporte des groupes de pas dentaires séparés entre eux par des intervalles. Chaque groupe comporte plusieurs pas dentaires égaux entre eux au pas dentaire rotor. La figure 3 montre un premier groupe stator comportant les dents 26, 27 et 28 et un deuxième groupe stator comportant les dents 29, 30 et 31. Ces deux groupes sont séparés entre eux par un intervalle 32 dans lequel est logé un faisceau du bobinage 33 du stator. Dans la position représentée sur la figure, les dents 26, 27 et 28 sont juste en face des dents 34, 35 et 36 du rotor. L'intervalle 32 est déterminé pour obtenir un décalage tel que 37 entre les dents 29, 30 et 31 du stator et les dents 38, 39 et 40 du rotor.

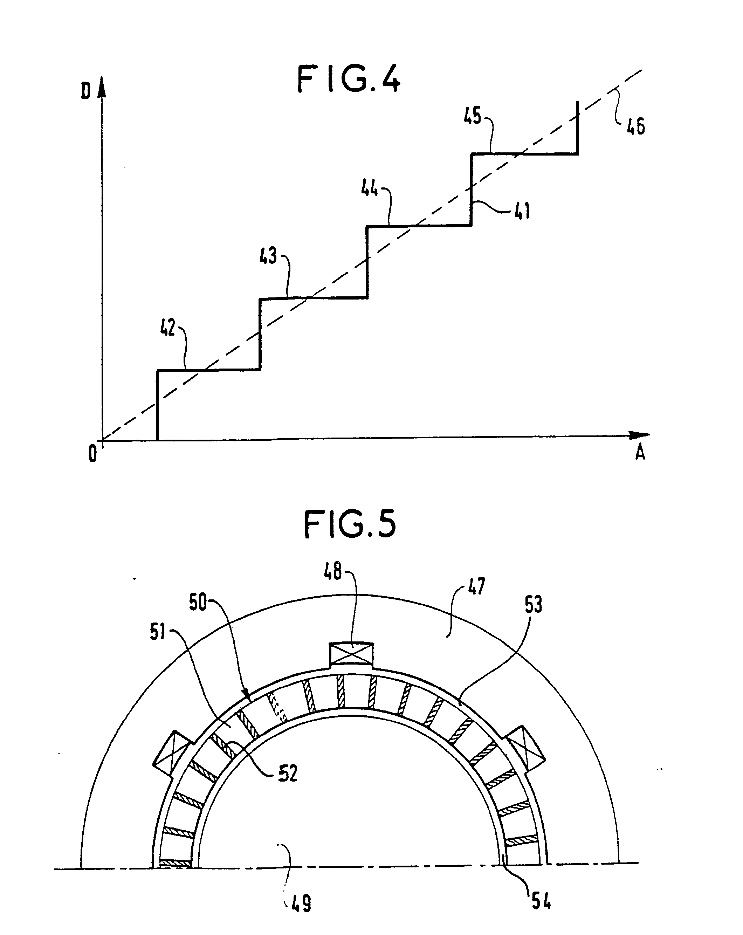

La figure 4 représente la loi de variation 41 des décalages magnetiques le long de l'entrefer dans une machine du type de celle illustrée sur la figure 3. La position le long de l'entrefer est repérée en abscisse par un angle A par rapport à un plan axial de référence, les décalages D étant portés en ordonnée. On voit que la courbe 41 comporte des paliers successifs 42, 43, 44 et 45. On peut définir à partir de cette loi de variation par paliers une loi moyenne linéaire 46.

En pratique, les deux modes de réalisation de moteurs vernier représentés sur les figures 2 et 3 ont un fonctionnement tout à fait comparable. Le coefficient K est égal au nombre d'encoches rotor par paire de pôles du bobinage stator dans la mesure où le décalage statorique par paire de pôles est d'une unité.

Le principe de fonctionnement des machines électrodynamiques de type vernier s'applique aussi aux génératrices vernier. Dans ce cas, par exemple, on fait tourner le rotor des machines représentées sur les figures 2 et 3 et on recueille le courant électrique produit dans les bobinages stator de ces machines.

Ce principe s'applique aussi aux machines vernier de type linéaire dans lesquelles l'entrefer n'est pas disposé suivant une surface cylindrique, mais suivant une surface plane séparant les deux pièces en mouvement relatif; la pièce mobile se déplace alors par rapport à la pièce fixe suivant une ligne droite parallèle à la surface de l'entrefer.

Il est possible de réaliser aussi des machines électrodynamiques de type vernier fonctionnant en réducteur rotatif.

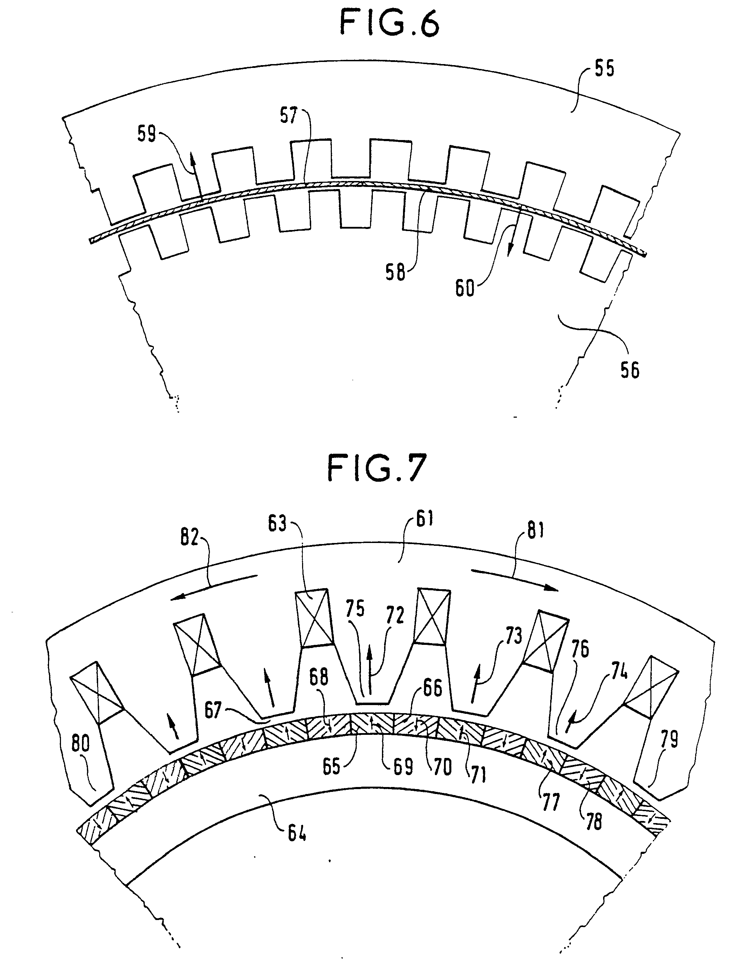

Le réducteur de type connu représenté sur la figure 5 comporte un premier rotor 47 de forme annulaire. Ce rotor n'est pas denté mais porte un bobinage continu 48 à 2 p pôles. Le réducteur comporte en outre un deuxième rotor 49 cylindrique coaxial. Ce rotor comporte n + 1 dents par paire de pôles non représentées, analogues à celles du rotor du moteur de la figure 2. Entre les rotors 47 et 49 est disposé un stator 50 coaxial de forme annulaire et comprenant n dents radiales 51 par paire de pôles, ces dents étant séparées l'une de l'autre par des entretoises 52 en matériau amagnétique. Le stator 51 est séparé des rotors 47 et 49 par des entrefers cylindriques 53 et 54.

Lorsqu'on entraîne en rotation le rotor 47 à une vitesse v et qu'on alimente le bobinage 48 par un courant électrique continu, on crée un champ tournant qui traverse radialement le stator 50 et pénètre dans le deuxième rotor 49. Il apparait donc que l'ensemble 47 - 53 - 50 est équivalent au stator des moteurs représentés sur les figures 2 et 3. Dans ces conditions, si le rotor 49 comporte n + 1 dents par paire de pôles du bobinage 48, le rotor 49 tourne à une vitesse $\frac{v}{n+1}$.

La figure 6 représente un autre réducteur vernier de type connu comportant un stator 55 et un rotor 56 coaxiaux et dentés. Le champ tournant est ici produit par un autre rotor coaxial 57 disposé dans l'entrefer situé entre le stator 55 et le rotor 56. Le rotor 57 comporte 2 p aimants tels que 58 juxtaposés le long de l'entrefer et dont les directions d'aimantation radiales 59 et 60 sont alternées de façon à créer un champ tournant à 2 p pôles. Si le stator 55 possède n encoches par paires de pôles et si le rotor 56 possède n + 1 encoches par paires de pôles, l'entraînement en rotation du rotor 57 à une vitesse v provoque une rotation du rotor 56 à une vitesse $\frac{v}{n+1}$.

La figure 7 représente un moteur électrique vernier selon l'invention. Ce moteur comporte un stator comportant une armature magnétique 61 formée d'un assemblage de tôles magnétiques. Cette armature est cylindrique de révolution autour d'un axe non représenté, de section droite annulaire, et comprend des dents et des encoches débouchant sur la surface cylindrique intérieure de cette armature. Un bobinage 63 polyphasè à 2 p pôles est logé dans les encoches. L'armature 61 du stator comprend n dents par paires de pôles, régulièrement espacées entre elles, soit en tout N = n p dents. Un rotor cylindrique, de révolution autour de l'axe et monté en rotation autour de cet axe, est disposé dans le volume délimité par la surface cylindrique interne du stator. Le rotor comporte une culasse magnétique 64 cylindrique, de forme annulaire, et des aimants sensiblement parallélépipédiques tels que 65 et 66 fixés sur la surface cylindrique extérieure de la culasse. La longueur de ces aimants est parallèle à l'axe, cette longueur étant sensiblement égale à la longueur de fer de l'armature du stator. La largeur des aimants est orientée tangentiellement par rapport à la surface cylindrique extérieure de la culasse 64, tandis que leur épaisseur est orientée radialement. Ces aimants sont juxtaposés sur la surface cylindrique extérieure de la culasse de manière que la surface cylindrique extérieure du rotor soit séparée de la surface cylindrique intérieure du stator par un entrefer 67. La fixation des aimants entre eux et sur la culasse 64 peut être réalisée par exemple par collage. Il est nécessaire d'isoler galvaniquement les aimants les uns des autres et de la culasse s'ils sont conducteurs.

Les aimants successifs le long de l'entrefer sont aimantés radialement de manière à produire des flux magnétiques traversant l'entrefer en sens alternés tels que 68, 69, 70 et 71. Le rotor comporte, par paire de pôles stator, un nombre m de paires d'aimants différent du nombre de n de dents stator par paire de pôles. Dans le cas de la figure 7, le nombre m est égal à n + 1. Le rotor comporte donc au total M = 2 (n + 1) p aimants.

Des flèches telles que 72, 73 et 74 ont été tracées dans les dents du stator pour indiquer le sens des flux magnétiques continus provenant des aimants et traversant le stator. La longueur de chaque flèche est proportionnelle à l'intensité du flux. En effet, la flèche 72 située dans la dent 75 correspond à une intensité maximale du flux, celui-ci étant créé par l'aimant 65 aimanté dans le sens 69 de la flèche 72, l'axe de la dent 75 passant au milieu de la largeur de l'aimant. Par contre la flèche 74 située dans la dent 76 correspond à une intensité de flux plus faible, puisqu'une partie seulement de la surface de la dent 76 en regard du rotor couvre l'aimant 77 aimanté parallèlement à la flèche 74, une autre partie plus faible de la dent 76 couvrant l'aimant 78 aimanté dans le sens opposé à la flèche 74. Enfin les dents 79 et 80 du stator, dont les axes sont situés juste à la jonction entre deux aimants, ne reçoivent aucun flux des aimants du rotor.

Il est clair qu'on obtient, dans les dents stator non visibles sur la figure 7 et situées immédiatement à droite et à gauche de cette figure, respectivement deux flux continus provenant des aimants. Le profil de ces deux flux continus est analogue à celui du flux représenté par les flèches 72 à 74 mais leur direction radiale est dans le sens opposé à celui de ces flèches. Le rotor crée donc dans le stator un champ magnétique continu qui se referme derrière les encoches suivant les flèches 81 et 82. Le champ continu produit dans le stator par les aimants a une intensité qui varie le long de l'entrefer selon une courbe périodique. La période de cette courbe correspond à n dents stator et à n + 1 dents rotor. Il s'agit donc d'un champ continu hétéropolaire à 2 p pôles.

Le bobinage 63 du stator crée dans le rotor un champ alternatif à 2 p pôles qui se referme dans la culasse 64. La machine représentée sur la figure 7 est donc un moteur de type synchrone. Compte-tenu de la différence entre le nombre n des dents stator par paires de pôles et le nombre (n + 1) des couples d'aimants par paires de pôles, portés par le rotor, ce moteur est du type vernier lorsqu'on alimente le bobinage stator 63 par un courant polyphasé, de façon à créer un champ tournant autour de l'axe, le rotor tourne à une vitesse n + 1 fois plus faible que celle du champ tournant.

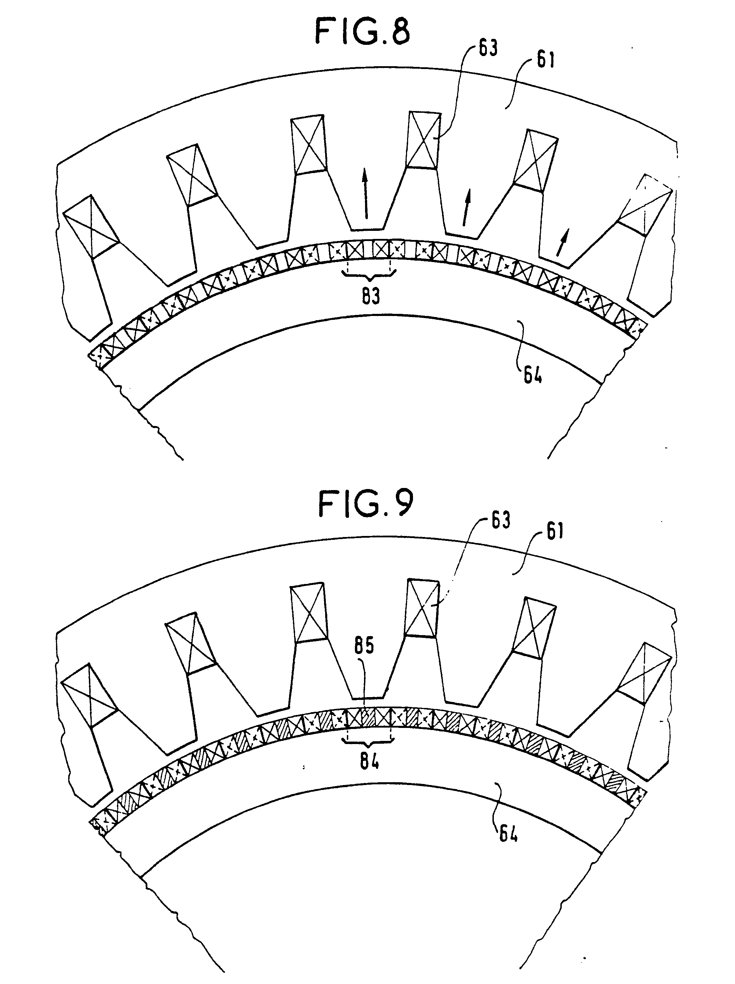

Le moteur électrique vernier représenté sur la figure 8 comporte un stator et un rotor muni d'une culasse 64; le stator et la culasse 64 sont identiques au stator et à la culasse du moteur illustré par la figure 7. Mais, dans le cas de la figure 8, le rotor comporte des bobines électriques telles que 83 fixées sur la surface cylindrique extérieure de la culasse. Ces bobines, en nombre égal à celui des aimants du moteur de la figure 7, sont disposées le long de l'entrefer de façon à créer des flux traversant l'entrefer en sens alternes.

Bien entendu le rotor comporte alors un système de bagues collectrices et de balais pour alimenter ces bobines en courant continu. Les bobines ainsi alimentées jouent un rôle identique à celui des aimants de la figure 7. Le fonctionnement du moteur illustré par la figure 8 est donc identique à celui du moteur de la figure 7.

Le moteur électrique vernier représenté sur la figure 9 est analogue à celui de la figure 8. Mais les bobines électriques 84 faisant partie du rotor du moteur de la figure 9 comportent des noyaux magnétiques tels que 85. Ces noyaux en acier magnétique sont disposés radialement et sont solidaires de la culasse 64.

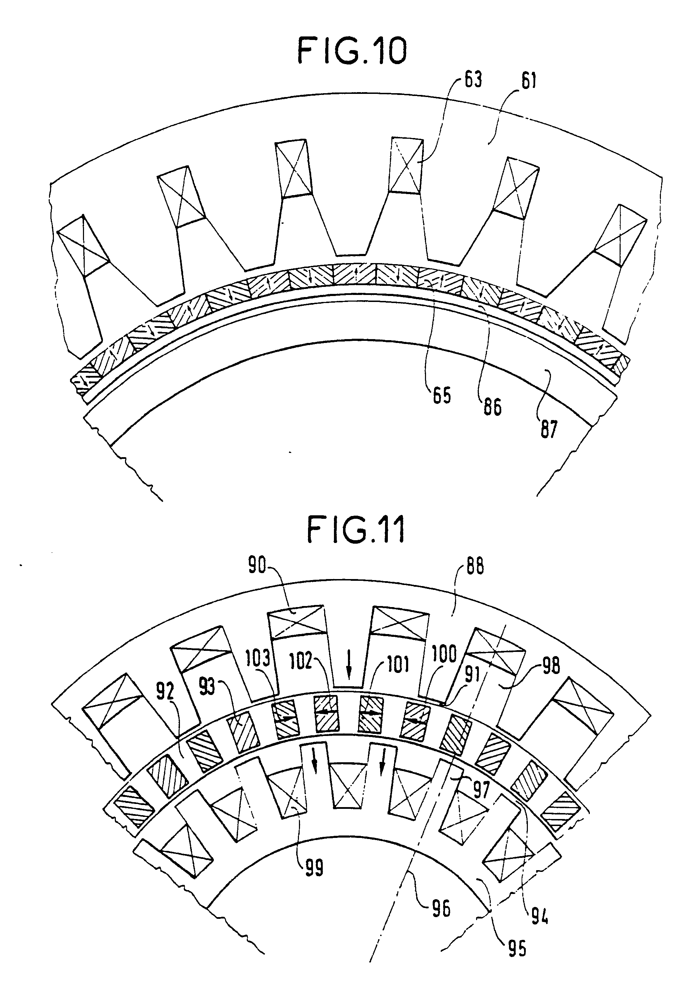

Le moteur électrique vernier représenté sur la figure 10 comporte un stator et un rotor muni d'aimants 65, comme le moteur illustré par la figure 7. Mais dans le cas de la figure 10, la culasse du rotor est divisée en deux parties: une partie 86 de faible épaisseur, capable de supporter les aimants, et une partie coaxiale interne 87 séparée de la partie 86 par un entrefer supplémentaire. La partie interne 87 est fixe ; elle permet de refermer le circuit des flux magnétiques. Cette disposition entraîne une perte d'ampères-tours dans l'entrefer supplémentaire mais présente l'avantage de diminuer l'inertie du rotor.

Le moteur électrique vernier représenté sur la figure 11 comporte un stator comprenant une armature magnétique 88 annulaire, cylindrique autour d'un axe non représenté. L'armature 88 comporte des dents et des encoches dans lesquelles est disposé un bobinage polyphasé 90 apte à créer un champ à 2 p pôles tournant autour de l'axe. L'armature 88 comporte n dents et n encoches par paires de pôles, uniformément réparties autour de l'axe.

La surface cylindrique intérieure de l'armature 88 est séparée d'un rotor annulaire coaxial par un entrefer 91 dans lequel débouchent les encoches de cette armature. Le rotor comprend un châssis magnétique annulaire constitué par exemple par un paquet de tôles. Ce chassis comporte, par paire de pôles stator, 2 (n + 1) secteurs radiaux 92 entre lesquels sont disposés des aimants 93 ; ces secteurs sont uniformément répartis autour de l'axe.

La surface cylindrique intérieure du rotor est séparée, par un autre entrefer 94, d'une autre armature magnétique 95 fixe, annulaire et coaxiale. L'armature 95 comporte n dents par paire de pôles, ces dents formant n encoches débouchant dans l'entrefer 94. Les dents des armatures 88 et 95 sont disposées de manière que le plan de symétrie axial 96 d'une dent quelconque 97 de l'armature 95 coïncide avec le plan de symétrie axial d'une encoche 98 de l'armature 88. Les encoches de l'armature 95 contiennent un bobinage polyphasé 99 apte à créer un champ tournant identique à celui créé par le bobinage 90.

Le moteur électrique vernier représenté sur la figure 11 fonctionne de la manière suivante. Les aimants 93 sont disposés de façon à produire des flux magnétiques tangentiels orientés alternativement dans un sens et dans l'autre, comme indiqué par les flèches 100 à 103. Ces flux sont concentrés dans les secteurs radiaux du rotor qui les dirigent alternativement de façon préférentielle vers les armatures 88 ou 95. On obtient ainsi dans les deux armatures du stator un champ magnétique continu à 2 p pôles, lié au rotor. Par suite de la différence entre le nombre de paires de secteurs radiaux du rotor et celui des dents de chaque armature, la vitesse de rotation du rotor est n + 1 fois plus faible que la vitesse de rotation du champ tournant créé par les bobinages des deux armatures du stator.

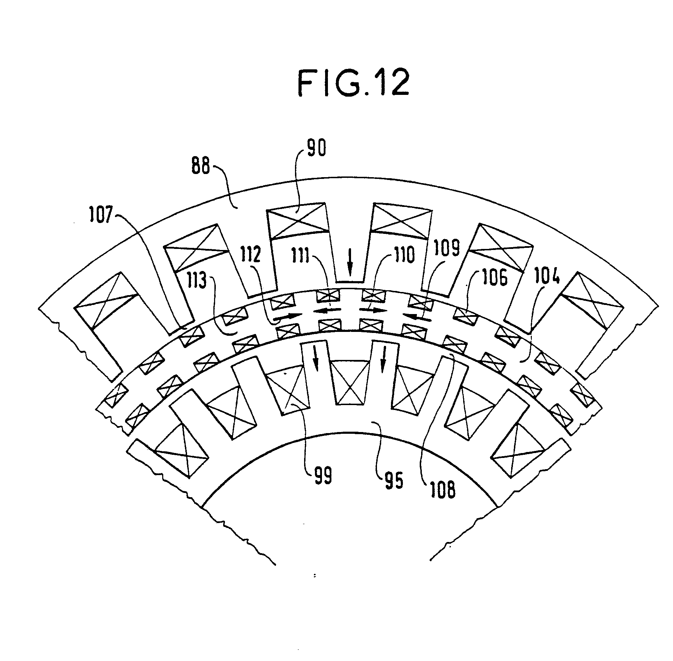

Le moteur électrique vernier représenté sur la figure 12 comporte un stator comprenant deux armatures dentées 88 et 95 munies respectivement de bobinages polyphasés 90 et 99 à 2 p pôles, ce stator étant identique à celui du moteur illustré par la figure 11. Chaque armature est donc munie de n dents par paires de pôles.

Le rotor du moteur de la figure 12 comporte un châssis magnétique annulaire comprenant 2 (n + 1) secteurs radiaux 104 par paires de pôles, uniformément répartis autour de l'axe. Entre ces secteurs sont disposées des bobines 106. Le rotor comporte aussi un jeu de balais et de bagues non visibles sur la figure pour alimenter ces bobinages en courant continu. Le rotor est séparé des deux armatures stator 88 et 95 respectivement par deux entrefers 107 et 108.

Les bobines 106 sont disposées de façon à créer entre les secteurs radiaux des flux magnétiques tangentiels 109 à 112 orientés en sens alternés. Ces flux sont concentrés dans les secteurs radiaux qui les dirigent alternativement vers les armatures 88 et 95. De préférence, le châssis magnétique du rotor comporte aussi des noyaux tangentiels 113 reliant entre eux les secteurs radiaux. Les bobines 106 sont enroulées autour des noyaux tangentiels.

Bien entendu le fonctionnement du moteur électrique vernier représenté sur la figure 12 est tout à fait analogue à celui du moteur de la figure 11.

Bien que les machines vernier selon l'invention décrites ci-dessus en référence aux figures 7 à 12 soient des moteurs rotatifs à pas dentaire réguliers, il est possible aussi de réaliser des machines selon l'invention comprenant des groupes de pas dentaires égaux entre eux et progressivement décalés. Il est possible aussi de réaliser des machines selon l'invention fonctionnant en génératrices, en réducteurs, et des machines électrodynamiques fonctionnant par déplacement linéaire.

Les machines électrodynamiques vernier selon l'invention sont du type hétéropolaire et présentent l'avantage, par rapport aux machines vernier selon l'art antérieur, d'avoir un encombrement et une inertie plus faibles.

A titre indicatif, il est possible de réaliser un moteur du type de celui illustré par la figure 7 ayant un couple maximum de 300 Nm et un couple permanent de 220 Nm, une vitesse de rotation de 1 à 2 tours/seconde et pesant 22 Kg. Le poids d'un moteur du type de celui illustré par la figure 11 et présentant les mêmes performances est environ de 13 Kg.

Les machines vernier selon la présente invention peuvent être appliquées notamment dans le domaine de la robotique, pour réaliser des moteurs de faible vitesse de rotation et de faible inertie, et inversement pour réaliser des moteurs compacts à très forts couple.

**Revendications**

1. Machine électrodynamique vernier, comportant

- deux pièces séparées l'une de l'autre par un entrefer, ces pièces pouvant se déplacer l'une par rapport à l'autre suivant une direction de manière que l'épaisseur moyenne de l'entrefer reste constante

- et des moyens coopérant magnétiquement avec une première de ces pièces pour créer un champ magnétique à 2p pôles, glissant le long de ladite direction, p étant un nombre entier,

la première pièce étant constituée par une armature magnétique comportant N dents formant N encoches, N étant un nombre entier multiple de p, les encoches débouchant dans l'entrefer et étant uniformément réparties le long de ladite direction,

la seconde pièce comportant M éléments disposés le long de ladite direction, M étant un nombre entier multiple de p et différent de N d'un nombre T = t x p, t étant un nombre entier petit par rapport à N $\frac{N}{P}$, caractérisée en ce que les M éléments comportent chacun deux générateurs de flux (65 - 66) orientés en sens alternés (69 - 70), ces éléments interférant avec les N dents (75) de la première pièce (61) pour créer dans cette première pièce un champ magnétique (72, 73, 74) à 2p pôles, capable de s'accrocher de manière synchrone au champ glissant à 2 p pôles créé par lesdits moyens (63) coopérant magnétiquement avec la première pièce (61).

2. Machine selon la revendication 1, caractérisé en ce que lesdits générateurs de flux sont des aimants (65) disposés en regard de l'armature (61) et aimantés perpendiculairement à l'entrefer.

3. Machine selon la revendication 1, caractérisée en ce que lesdits générateurs de flux comportent des bobines électriques (83) disposées en regard de l'armature (61), les axes de ces bobines étant perpendiculaires à l'entrefer, et des moyens pour alimenter ces bobines (83) en courant continu.

4. Machine selon la revendication 3, caractérisée en ce que chacun desdits M éléments comporte en outre deux noyaux magnétiques (85) dont les axes sont perpendiculaires à l'entrefer, les bobines électriques (84) étant disposées coaxialement autour de ces noyaux (85).

5. Machine selon la revendication 1, caractérisée en ce que, ladite seconde pièce étant cylindrique de révolution autour d'un axe, de section droite annulaire et mobile en rotation autour de l'axe, l'armature (61) étant fixe, cylindrique de révolution autour de l'axe, de section droite annulaire et disposée coaxialement autour de la deuxième pièce,

- lesdits moyens pour créer un champ magnétique glissant comportent un bobinage polyphasé (63) disposé dans les encoches de l'armature (61), le champ glissant étant un champ tournant autour de l'axe,

- et elle comporte en outre une culasse cylindrique (64) coaxiale, disposée dans le volume cylindrique interne de la seconde pièce, cette culasse coopérant magnétiquement avec la seconde pièce de façon à fermer le circuit des flux magnétiques créés par lesdits générateurs de flux (65) et par ledit bobinage (63).

6. Machine selon la revendication 5, caractérisée en ce que la culasse (87) est fixe et séparée de la seconde pièce par un autre entrefer.

7. Machine selon la revendication 5, caractérisée en ce que la culasse (64) est fixée sur la surface cylindrique interne de la seconde pièce.

8. Machine selon la revendication 1, caractérisée en ce que, ladite seconde pièce étant cylindrique de révolution autour d'un axe, de section droite annulaire et mobile en rotation autour de l'axe, ladite armature étant une première armature fixe (88), cylindrique de forme annulaire et disposée coaxialement autour de la seconde pièce, l'entrefer séparant la première armature de la seconde pièce étant un premier entrefer (91),

- la machine comporte en outre une seconde armature (95) fixe cylindrique, de forme annulaire, disposée coaxialement dans le volume cylindrique intérieur de la seconde pièce et séparée de celle-ci par un second entrefer (94), la seconde armature comportant N dents formant N encoches débouchant dans le second entrefer, le plan axial (96) de symétrie de chaque dent (97) d'une armature (95) étant confondu avec le plan axial de symétrie d'une encoche (98) de l'autre armature (88),

- lesdits moyens pour créer un champ magnétique glissant comportent un premier bobinage (90) polyphasé disposé dans les encoches (98) de la première armature (88) et un deuxième bobinage (99) polyphasé disposé dans les encoches de la seconde armature (95), le champ glissant étant un champ tournant autour de l'axe

- et chacun des M éléments de la seconde pièce comporte en outre deux secteurs radiaux (92) d'un châssis magnétique, lesdits 2 M générateurs de flux étant disposés entre les secteurs radiaux de façon à créer des flux magnétiques tangentiels, ces flux étant dirigés par lesdits secteurs radiaux alternativement vers la première (88) et la deuxième (95) armature à travers les premier (91) et deuxième (94) entrefers, ledit champ magnétique continu étant formé dans les première et seconde armatures.

9. Machine selon la revendication 8, caractérisée en ce que lesdits générateurs de flux sont des aimants (93).

10. Machine selon la revendication 8, caractérisée en ce que lesdits générateurs de flux sont des bobines électriques (106) et en ce que le châssis magnétique de la seconde pièce comporte des noyaux tangentiels (113) reliant entre eux les secteurs radiaux (104), les bobines (106) étant disposées autour de ces noyaux (113).

11. Machine selon la revendication 1, caractérisée en ce que, la première (61) et la seconde pièce étant cylindriques de révolution autour d'un même axe, le déplacement relatif de ces pièces étant un mouvement de rotation autour de cet axe, ledit champ magnétique glissant étant alors un champ tournant autour dudit axe, le nombre N des encoches de l'armature (61) est égal à n p, n étant un nombre entier, et le nombre M desdits éléments de la seconde pièce est égal à (n + 1) p, ledit champ magnétique continu (72 à 74) étant un champ à 2 p pôles, la vitesse de rotation de la seconde pièce (65) par rapport à l'armature (61) étant n + 1 fois plus faible que la vitesse du champ tournant.

**Patentansprüche**

1. Elektrodynamische Vernier-Maschine, bestehend aus:
- zwei durch einen Luftspalt getrennten Bauteilen, von denen sich eines gegen das andere in einer Richtung verschiebt, derart, daß die mittlere Höhe des Luftspalts konstant bleibt, und
- magnetisch mit einem ersten dieser Bauteile zusammenwirkenden Mitteln zur Erzeugung eines 2p-poligen Magnetfeldes, welches entlang der genannten Richtung gleitet, wobei p eine ganze Zahl ist, das erste Bauteil aus einer magnetischen Armatur mit N Zähnen und N Nuten besteht, N ein ganzes Vielfaches von p ist, die Nuten in den Luftspalt münden und gleichmäßig entlang der genannten Richtung verteilt sind, und wobei das zweite Bauteil entlang der genannten Richtung M angeordnete Einheiten umfaßt, M ein ganzes Vielfaches von p, aber von N um die Zahl T = txp verschieden ist und t eine im Vergleich zu N/p kleine Zahl ist,
dadurch gekennzeichnet, daß die M Einheiten jeweils zwei Flußgeneratoren (65 - 66) mit abwechselnder Orientierungsrichtung (65 - 70) aufweisen, wobei die Einheiten mit den N Zähnen (75) des ersten Bauteils (61) in Wechselwirkung treten, um indemselben ein 2p-poliges Magnetfeld zu erzeugen, das sich synchron an das 2p-polige, gleitende Feld anhängt, welches von den genannten, magnetisch mit dem ersten Bauteil (61) zusammenwirkenden Mitteln (63) erzeugt wird.

2. Maschine nach Anspruch 1, dadurch gekennzeichnet, daß die Flußgeneratoren Magnete (65) sind, die dem Anker (61) gegenüberstehen und senkrecht zum Luftspalt magnetisiert werden.

3. Maschine nach Anspruch 1, dadurch gekennzeichnet, daß die Flußgeneratoren elektrische Wicklungen (83) besitzen, die dem Anker (61) gegenüberstehen und deren Achse senkrecht zum Luftspalt steht, und daß sie Mittel zur Versorgung der Wicklungen mit Gleichstrom besitzen.

4. Maschine nach Anspruch 3, dadurch gekennzeichnet, daß jede der M Einheiten weiter zwei Magnetkerne (85) aufweist, deren Achsen senkrecht zum Luftspalt stehen, wobei die elektrischen Wicklungen (84) koaxial um die Kerne (85) gelegt sind.

5. Maschine nach Anspruch 1, dadurch gekennzeichnet, daß das zweite Bauteil drehzylindrisch um eine Achse ausgebildet ist, einen ringförmigen Querschnitt aufweist und drehbar um die Achse gelagert ist, während die Armatur (61) feststeht, dabei drehzylindrisch um eine Achse ausgebildet ist, einen ringförmigen Querschnitt aufweist und koaxial um das zweite Bauteil angeordnet ist,
- daß die Mittel zur Erzeugung des gleitenden Magnetfelds eine mehrphasige Wicklung (63) aufweisen, die in den Nuten der Armatur (61) angeordnet ist und das gleitende Feld ein um die Achse drehendes Feld ist,
- und daß die Maschine weiter ein koaxiales zylindrisches Joch (64) aufweist, das im zylindrischen Inneraum des zweiten Bauteils angeordnet ist und magnetisch mit dem zweiten Bauteil so zusammenwirkt, daß es den von den genannten Flußgeneratoren (65) und der Wicklung (63) erzeugten Magnetflußkreis schließt.

6. Maschine nach Anspruch 5, dadurch gekennzeichnet, daß das Joch (87) feststeht und von dem zweiten Bauteil durch einen weiteren Luftspalt getrennt ist.

7. Maschine nach Anspruch 5, dadurch gekennzeichnet, daß das Joch (64) mit der zylindrischen Innenoberfläche des zweiten Bauteils fest verbunden ist.

8. Maschine nach Anspruch 1, dadurch gekennzeichnet, daß das zweite Bauteil drehzylindrisch um eine Achse gelagert ist, einen ringförmigen Querschnitt aufweist und drehbar um die Achse gelagert ist, und die genannte Armatur eine erste feststehende Armatur (88) ist, zylindrisch von ringförmiger Gestalt, und koaxial um das zweite Bauteil herum angeordnet ist, wobei der die erste Armatur und das zweite Bauteil trennende Luftspalt ein erster Luftspalt (91) ist,
- daß die Maschine weiter eine zweite feststehende, zylindrische, ringförmige Armatur (95) besitzt, die koaxial im zylindrischen Innenraum des zweiten Bauteils angeordnet ist und von diesem durch einen zweiten Luftspalt (94) getrennt ist, wobei die zweite Armatur N Zähne mit N in den Luftspalt mündenden Nuten aufweist und die axiale Symmetriebene (96) jedes Zahnes (97) der einen Armatur (95) mit der axialen Symmetrieebene einer Nut (98) der anderen Armatur (88) zusammenfällt,
- daß die Mittel zur Erzeugung des gleitenden Magnetfelds eine erste mehrphasige Wicklung (90) umfassen, die in den Nuten (98) der ersten Armatur angebracht ist, und eine zweite mehrphasige Wicklung (99), die in den Nuten der zweiten Armatur (95) angebracht ist, wobei das gleitende Feld ein um die Achse drehendes Feld ist,

- und daß die M Einheiten des zweiten Bauteils weiter zwei radiale Sektoren (92) eines magnetischen Chassis aufweisen, und die genannten 2M Flußgeneratoren in der Weise zwischen den radialen Sektoren angeordnet sind, daß sie tangential gerichtete magnetische Flüsse erzeugen, welche von den radialen Sektoren abwechselnd über den ersten (91) und den zweiten (94) Luftspalt in Richtung auf die erste (88) und die zweite (95) Armatur orientiert werden, und daß das genannte Gleichfeld in der ersten und zweiten Armatur gebildet wird.

9. Maschine nach Anspruch 8, dadurch gekennzeichnet, daß die Flußgeneratoren Magnete sind.

10. Maschine nach Anspruch 8, dadurch gekennzeichnet, daß die Flußgeneratoren elektrische Wicklungen (106) sind und das magnetische Chassis des zweiten Bauteils Tangentialkerne (113) aufweist, welche die radialen Sektoren (104) miteinander verbinden, wobei die Wicklungen (106) um die Kerne (113) gelegt sind.

11. Maschine nach Anspruch 1, dadurch gekennzeichnet, daß das erste (61) und zweite Bauteil drehzylindrisch um die gleiche Achse angeordnet sind, daß die Relativbewegung der beiden Teile eine Drehbewegung um diese Achse ist, daß das gleitende Magnetfeld ein um die genannte Achse rotierendes Drehfeld ist, wobei die Anzahl N der Nuten in der Armatur (61) gleich n.p und n eine ganze Zahl ist, und wobei die Anzahl M der Einheiten des zweiten Bauteils gleich (n + 1)p ist, daß das Gleichfeld (72 - 74) ein 2p-poliges Feld ist, und daß die Drehgeschwindigkeit des zweiten Bauteils (65) gegenüber der Armatur (61) n + 1 mal kleiner als die Geschwindigkeit des Drehfeldes ist.

## Claims

1. An electrodynamic vernier machine comprising:

two parts separated from each other by a gap, said parts being capable of moving relative to each other in a direction such that the average width of the gap remains constant; and

means co-operating magnetically with a first one of said parts to create a magnetic field having 2p poles slipping along said direction, p being an integer;

the first part being constituted by a magnetic frame comprising N teeth forming N slots, where N is an integer multiple of p, with the slots being open to the gap and being uniformly spaced along the said direction; and

the second part comprising M elements disposed along the said direction, where M is an integer multiple of p and differs from N by a number T = t x p, where t is an integer which is small relative to N/p;

characterized in that each of the M elements comprises two flux generators (65 - ... ) oriented in alternating directions (69 - 70), said elements interfering with the N teeth (75) of the first part (61) to create a 2p-pole magnetic field (72, 73, 74) in said first part being capable of synchronously latching onto the 2p-pole slipping field created by the said means (63) which co-operate magnetically with the first part (61).

2. A machine according to claim 1, characterized in that the said flux generators are magnets (65) disposed opposite the frame (61) and magnetized perpendicularly to the air gaps.

3. A machine according to claim 1, characterized in that the said flux generators comprise electric windings (83) disposed opposite the frame (61), with the axes of these windings being perpendicular to the air gap, and means being provided to supply DC to these windings (83).

4. A machine according to claim 3, characterized in that each of the said M elements also comprises two magnetic cores (85) whose axes are perpendicular to the air gap, the electrical windings (84) being disposed axially about said cores (85).

5. A machine according to claim 1, characterized in that the said second part is a circularly symmetrical cylinder about an axis, being of annular right section and rotatable about the axis, and the frame (61) is a fixed, circularly symmetrical cylinder about the axis, of annular right cross-section and coaxially disposed around said second part,

the said means for creating a slipping magnetic field comprising a polyphase winding (63) disposed in the slots of the frame (61), the slipping field being a field rotating about the axis; and

the machine further comprising a cylindrical yoke (64) which is disposed coaxially inside the internal cylindrical volume of said second part, said yoke cooperating magnetically with said second part in such a manner as to loop the path of the magnetic flux created by the said flux generators (65) and by the said winding (63).

6. A machine according to claim 5, characterized in that the yoke (87) is fixed and separated from the second part by another air gap.

7. A machine according to claim 5, characterized in that the yoke (64) is fixed to inside cylindrical surface of the second part.

8. A machine according to claim 1, characterized in that the said second part is a circularly symmetrical cylinder about an axis of annular right cross-section and rotatable about the axis, the frame is a fixed first frame (88) which is cylindrical, annular in shape and disposed coaxially around the second part, the air gap separating the first frame from the second part being a first air gap (91),

the machine further comprising a second frame (95) which is fixed, cylindrical, annular in shapend disposed coaxially inside the interior cylindrical volume of the second part and being separated therefrom by a second air gap (94), the second frame comprising N teeth forming N slots opening out into the second air gap, the axial plane of symmetry (96) of each tooth (97) of either frame (95) coinciding with the axial plane of symmetry of a slot (98) of the other frame (88);

the said means for creating a slipping magnetic field comprising a first polyphase winding (90) disposed in the slot (98) of the first frame (88) and a second polyphase winding (99) disposed in the slots of the second frame (95), the slipping field being a field rotating about the axis; and

each of M elements of the second part further comprising two radial sectors (92) of a magnetic frame, the said 2M flux generators being disposed between the radial sectors in such a manner as to create tangentially directed magnetic flux, said flux being directed by said radial sectors alternately towards the first (88) and the second (95) stator frames via the first (91) and second (94) air gaps, the said continuous magnetic fields being formed in the first and second stator frames.

9. A machine according to claim 8, characterized in that the said flux generators are magnets (93).

10. A machine according to claim 8, characterized in that the said flux generators are electrical windings (106) and in that the magnetic frame of the second part comprises tangential cores (113) interconnecting the radial sectors (104), with the windings (106) being disposed around said cores (113).

11. A machine according to claim 1, characterized in that the first (61) and second parts are cylindrical and circulary symmetrical about a common axis, with the relative displacement of these parts being rotation about said axis, the said slipping magnetic field then being a magnetic field rotating about the said axis, the number N of slots in the frame (61) being equal to np, where $\underline{n}$ is an integer, and the number M of the said elements of the second part is equal to $(n + 1)p$, the said continuous magnetic field (72 to 74) being a 2p-pole field, and the speed of rotation of the second part (65) relative to the stator frame (61) being $n + 1$ times less than the speed of the rotating field.

# FIG.1

# FIG. 2

# FIG. 3

0 155 877

# FIG.4

# FIG.5

5

# FIG.6

# FIG.7

# FIG.8

63
61
83
64

# FIG.9

63
61
85
84
64

# FIG.10

# FIG.11

# FIG.12